(19) Europäisches Patentamt
European Patent Office
Office européen des brevets

(11) Publication number : **0 401 011 B1**

# (12) EUROPEAN PATENT SPECIFICATION

(45) Date of publication of patent specification : **09.03.94 Bulletin 94/10**

(51) Int. Cl.$^5$ : **H04N 9/79,** H04N 9/78

(21) Application number : **90305921.0**

(22) Date of filing : **31.05.90**

## (54) Filter circuits.

(30) Priority : **31.05.89 JP 139653/89**

(43) Date of publication of application : **05.12.90 Bulletin 90/49**

(45) Publication of the grant of the patent : **09.03.94 Bulletin 94/10**

(84) Designated Contracting States : **DE FR GB NL**

(56) References cited :
**EP-A- 0 313 372**
**GB-A- 2 104 341**
**GB-A- 2 204 209**
**US-A- 4 847 682**

(73) Proprietor : **SONY CORPORATION**
**7-35 Kitashinagawa 6-chome Shinagawa-ku**
**Tokyo 141 (JP)**

(72) Inventor : **Miyake, Yoshitaka, c/o Patents Division**
**Sony Corp., 6-7-35 Kitashinagawa, Shinagawa-ku**
**Tokyo 141 (JP)**

(74) Representative : **Thomas, Christopher Hugo et al**
**D. Young & Co, 21 New Fetter Lane**
**London EC4A 1DA (GB)**

EP 0 401 011 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to filter circuits, and more particularly, but not exclusively, to filter circuits for use in PAL type video recorders.

In NTSC type video recorders, the chroma signal and the luminance signal are separated using band filter means or a comb type filter circuit. As shown in Figure 6, a video signal Sv is separated using a band-pass filter 2 and a low-pass filter 3 to obtain a chroma signal SC and a luminance signal Sy. Where the video signal Sv is subject to band separation, the luminance signal component of the frequency band of the chroma signal SC (hereinafter referred to as the chroma band) is extracted from the luminance signal Sy, and results in the resolution of the image being deteriorated. For this reason, a comb type filter circuit is used for vertical correlation of the division of the chroma and luminance signals, whereby the resolution of the image is improved.

With PAL type video recorders, the above type of band separation means is used, and the video signal is separated into a chroma signal and a luminance signal. If a comb type filter circuit were used, it would be expected that the resolution of the recorded image on reproduction would be improved as compared with the NTSC type band type separation technique. However, this is not the case as will become clear below.

Figure 7 shows the case wherein in a NTSC type system it is deemed appropriate to have the comb type filter circuit 6 include a second horizontal scanning line timing delay circuit 5. That is to say, the video signal Sv is passed through a band-pass filter 8 to obtain a chrome band signal component Svb. After passing through the second delay circuit 5, the signal component Svbd is supplied to a subtracter 10 with the signal component Svb. The output of the subtracter 10 is then supplied to a voltage divider circuit 12. In this manner the second delay circuit 5 delays the signal component Svb by only two horizontal line periods with respect to the output from the band-pass filter 8, and thus enables vertical correlation during the interval and therefore the formation of the chroma signal SC. Accordingly, the video signal Sv which is delayed by a delay circuit 14 is supplied to a subtracter 16 along with the output of the voltage divider circuit 12 (that is, the signal SC). The subtracter 16 accordingly supplies the luminance signal Sy.

However, if a comb type filter circuit is used with PAL type video signals, applying the band separation technique, the relative improvement in the resolution is reversed and the reproduced image is deteriorated. Thus, as shown in Figures 8 and 9, when a predetermined length of black occurs in the middle of the ith white line in the image M, the video signal Sv (Figure 9A) drops to the black level for a predetermined period of time. While the signal compound Svb from the band-pass filter 8 (Figure 9B) maintains a zero level in lines other than the ith line, during the ith line a high frequency fluctuation signal component (noise) is produced.

As a result, the chroma signal SC (Figure 9C) exhibits a corresponding high frequency fluctuation in the ith line and the ith+2 line. This latter fluctuation is induced by the second delay circuit 5, which delays the high frequency noise in the signal component Svb and then supplies it to the subtracter 10 at a time when negation cannot be achieved and duplication occurs. As a result, a high frequency ringing signal component is undesirably increased.

As a result, the luminance signal Sy (Figure 9D) is influenced at the subtracter 16 whereby the ith+2 line exhibits the high frequency ringing phenomenon, which results in the image S shown in Figure 10 containing visible traces or specks SN. As these occur at a clear spacing of two lines from the ith one, the actual reproduction quality is reduced.

Moreover, the circuit arrangement of Figure 7 is such that the portions which are not subject to vertical correlation induce unavoidable dot disturbance. As the dot disturbance occurs at a clear two scanning line interval, this phenomenon is also visible and adds to the degradation of the quality of the image reproduction.

According to the present invention there is provided a filter circuit comprising:

restriction means for extracting a chroma band signal component from a video signal and supplying a first signal;

first delay means for delaying said video signal by a horizontal scanning line period and supplying a second signal;

second delay means for delaying said second signal by a horizontal scanning line period and supplying a third signal;

selection means which is responsive to said first, second and third signals, for:

in the event that said first, second and third signals are either all positive or all negative, selecting the value of said first, second or third signal which is closest to zero and supplying a signal indicative thereof, and

in the event that all of said first, second and third signals exhibit one of a positive and a negative value, selecting a zero value and supplying a signal indicative thereof; and

arithmetic logic means responsive to the signals supplied by said selection means and said first delay means for deriving a chroma signal.

According to the present invention there is also provided a filter circuit comprising:

a first delay means for delaying a video signal by a horizontal scanning line period and supplying a first signal indicative thereof;
restriction means for extracting a chroma band signal component from the video signal and supplying a second signal indicative thereof;
a second delay means for delaying said first signal by a horizontal scanning line period and supplying a third signal indicative thereof;
a third delay means for delaying said first signal by a horizontal scanning line period and supplying a fourth signal indicative thereof;
selection means responsive to said first, second and third signals for:
in the event that said first, second and third signals are either all positive or all negative, selecting the value of said first, second or third signal which is closest to zero and supplying an output signal indicative thereof, and
in the event that all of said first, second and third signals exhibit one of a positive and a negative value, selecting a zero value and supplying an output signal indicative thereof; and
arithmetic logic means responsive to said first signal from said first delay means, the output of said selection means, and said fourth signal from said second delay means for deriving a luminance signal.

In an embodiment of the invention, a video signal is filtered and delayed in a manner whereby three chroma band signals are produced. The second and third are respectively delayed with respect to the first by one and two horizontal scanning line periods respectively. A switching circuit monitors the levels of the signals, and generates an output based on the signal which is closest to zero when all are either positive or negative, an output which is zero when a mixture of positive and negative values appear, and zero if any one of the signals should exhibit a zero value. The output of the switching circuit is subtracted from the second signal to produce a chroma signal. The video signal after being delayed by two horizontal scanning line periods is arithmetically modified. Examples of this modification are the subtraction of the chroma signal therefrom, or the sequential subtraction of the second signal and then the addition of the output of the switching circuit.

According to the present invention there is also provided a video circuit having a source of a video signal, and which comprises a filter circuit comprising: a first band-pass filter which receives the video signal and which outputs a first signal; a first delay circuit and a second band-pass filter connected in series, the first delay circuit being arranged to receive the video signal and the second band-pass filter being arranged to output a second signal; a second delay circuit which is connected to the output of the second band-pass filter and arranged to output a third signal; a switching circuit having first, second and third inputs which respectively receive the first, second and third signals, and an output, the switching circuit including means for: in the event that the first second and third signals are either all positive or all negative, selecting the value of the first, second and third signal which is closest to zero and outputting a signal to the output indicative thereof, and in the event that all of the first, second and third signals exhibit one of a positive and a negative value, selecting a zero value and outputting a signal to the output indicative thereof; a third delay circuit, the third delay circuit being arranged to receive the output of the first delay circuit; a first arithmetic circuit which is operatively connected to the output of the second band-pass filter and the output of the switching circuit, the first arithmetic circuit being arranged to subtract the signal which appears on the output of the switching circuit from the signal which is output of the first arithmetic circuit and to the output of the third delay circuit.

According to the present invention there is also provided a video circuit having a source of a video signal, and which comprises a filter circuit comprising: a first band-pass filter which received the video signal and which outputs a first signal; a first delay circuit and a second band-pass filter connected in series, the first delay circuit being arranged to receive the video signal and the second band-pass filter being arranged to output a second signal; a second delay circuit which is connected to the output of the second band-pass filter and arranged to output a third signal; a switching circuit having first, second and third inputs which respectively receive the first, second and third signals, and an output, the switching circuit including means for: in the event that the first second and third signals are either all positive or all negative, selecting the value of the first, second and third signals which is closest to zero and outputting a signal to the output indicative thereof, and in the event that all of the first, second and third signal to the output indicative thereof; a third delay circuit, the third delay circuit being arranged to receive the output of the first delay circuit; a first arithmetic circuit which is operatively connected to the output of the second band-pass filter and the output of the switching circuit, the first arithmetic circuit being arranged to subtract the signal which appears on the output of the switching circuit from the signal which is output by the second band-pass filter; a second arithmetic circuit which is operatively connected to the output of the second band-pass filter and the third delay circuit; and a third arithmetic circuit which is operatively connected with the output of the switching circuit and to the output of the second arithmetic circuit.

According to the present invention there is also provided a video circuit having a source of a video signal, and which comprises a filter circuit comprising: means for generating first, second and third chroma band signals wherein the second and third are respectively delayed with respect to the first by one and two predetermined periods respectively; a switching circuit which monitors the levels of the first, second and third signals and generates an output based on the signal which is closest to zero when all are either positive or negative, an output which is zero when a mixture of positive and negative values appear, and zero if any one of the signals should exhibit a zero value; first arithmetic means wherein the output of the switching circuit is subtracted from the second signal to produce a chroma signal; means for delaying the video signal by two predetermined periods; and means for arithmetically modifying video signal which is delayed by the two predetermined periods.

The invention will now be described by way of example with reference to the accompanying drawings, throughout which like parts are referred to by like references, and in which:

Figure 1 is a block diagram of a first embodiment of filter circuit according to the present invention;
Figures 2 and 3 are explanatory diagrams;
Figure 4 is a timing chart for the first embodiment;
Figure 5 is a block diagram of a second embodiment of filter circuit according to the present invention;
Figure 6 is a block diagram illustrating previously proposed separation of chroma and luminance signals;
Figure 7 is a block diagram of a previously proposed comb type filter circuit; and
Figures 8 to 10 are diagrams used to illustrate the operation of and problems with previously proposed arrangements.

Referring to Figure 1, the first embodiment is a filter circuit 20 comprising three delay circuits 21, 25 and 29, two band-pass filters 22 and 24, and two subtracters 28 and 30, which are operatively connected with a correlation decision switching circuit 26 as shown.

A PAL type video signal Sv is supplied by way of the delay circuit 21 to the band-pass filter 22. The delay circuit 21 is arranged to delay the video signal Sv by one horizontal scanning line period. The delay circuit 21 and the band-pass filter 22 are such as to output a chroma signal SB.

The second band-pass filter 24, which has the same frequency characteristics as the band-pass filter 22, is arranged to receive the video signal Sv directly, and to output a chroma signal SA.

In addition to this, the delay circuit 25, which has the same delay characteristics as the delay circuit 21 (one line period), receives the output of the band-pass filter 22 and outputs a chroma signal SC.

In this embodiment, the delay circuits 21 and 25, and the band-pass filter circuits 22 and 24 are arranged to produce signals SA, SB and SC wherein the signal SB is delayed with respect to the signal SB by the same time period. These signals are such that in accordance with the switching of the levels thereof, the formation of PAL type chroma and luminance signals Sco and Syo, is enabled.

The correlation decision switching circuit 26 is arranged to receive the signals SA, SB and SC and to derive an output signal Sout in accordance with the following equation:

$$Out = \max(\min(A,B,C),0) + \min(\max(A,B,C),0) \quad (1)$$

where:
A, B and C denote the levels of the input signals SA, SB and SC;
Out denotes the signal level of the signal Sout; and
0 denotes a zero level signal level.

The output of the switching circuit 26 is applied to the subtracter 28 along with the signal SB from the band-pass filter 22, whereby the chroma signal Sco is produced.

The switching circuit 26 is such that when the signal levels of the signals SA, SB and SC all rise in the positive direction, in accordance with the above equation, the switching circuit 26 selects the lowest signal level among the SA, SB and SC levels from the max(min(A<B,C),0) portion of equation (1) and selects 0 from the min(max(A,B,C),0) portion. This maintains the level of the signal Sout equal to the smallest of the of three inputs, and therefore close to zero.

On the other hand, when all of the signals SA, SB and SC have negative values, the switching circuit 26 functions to select the zero level from the max(min(A,B,C),0) portion of equation (1) and the maximum value from among A, B and C from the min(max(A,B,C),0) portion. This again tends to maintain the level of signal Sout close to zero.

When the signals SA, SB and SC exhibit a mixture of positive and negative levels, the level of the signal which is the closest to zero is selected, while when one of the signals exhibits a zero value (not all of the signals are positive or negative in value) a zero value is selected, and the level of the signal Sout is maintained at zero.

Figure 2 shows an image which has alternative black and white stripes, wherein the pitch is selected to fall in the chroma band (namely, an image wherein only the total vertical direction correlation of the luminance component is shown). In this instance the levels of the signals SA, SB and SC of the video signal Sv, are maintained in accordance with the following relationship:

$$Out = A = B = C \quad (2)$$

The signal Sout which is produced when the above described conditions exist is such that the level of the chroma signal Sco which results from the subtraction of the signals Sout and SB at the subtracter 28, is maintained at a zero level.

The delay circuit 29 has as its delay period the same as that of the delay with which the switching circuit 26 selects the output from the band-pass filter 22, and the output from the delay circuit 21 is subject to subtraction at the subtracter 30.

Accordingly, in connection with the total correlation of the luminance component of the video signal Sv in the vertical direction (Figure 2), as the level of the video signal Sv is maintained at a zero level by the delay circuit 29 while the level of the chroma signal Sco is being maintained at a zero level at the subtracter 28, the luminance signal Syo which passes through the subtracter 30 is improved due to the avoidance of deterioration. In this embodiment, the luminance signal Syo is supplied from the subtracter 30.

Therefore, the luminance component is not included in the chroma band, and the above vertical direction total correlation of the luminance signal component (namely, the striped signal component) can be obtained. Accordingly, reduction of the luminance signal component is prevented, and band separation is such that the resolution and quality of the reproduced image is improved.

Moreover, in connection with this embodiment, when all of the input signals SA, SB and SC to the switching circuit 26 assume either positive or negative values, the level closest to zero is selected. When all of said inputs are either one of positive or negative, the value of the signal Sout is maintained at zero. As a result, the vertical stripe luminance signal component is separated from the luminance signal Sco and the luminance signal Syo is accordingly amplified.

In this connection, in the case of a PAL type video signal Sv wherein the overall desired clarity for a single colour image is maintained (namely, an image wherein only the chroma component correlation is depicted in the image), the following relationship can be developed when the signal Sout is maintained at a zero level:

$$A = -C \quad (3)$$

Therefore, the output SB of the band-pass filter 22 is supplied from the subtracter 28 without modification in the form of the signal Sco. The output of the subtracter 30 is modified by the signal Sco (in this case the signal SB) in a manner to generate the signal Syo. In response to this, the video signal Sv is cleanly separated into the chroma and the luminance components.

As shown in Figure 3 it assumed for example that the video signal Sv produces an image M composed of sub-images M1 and M2. M1 in this case is a clearly maintained black and white image having a predetermined brightness and which is displayed above the coloured image M2 having a predetermined brightness. It is further assumed that the chroma signal at the boundary between M1 and M2 is unrelated.

In this case, the image M1 as the levels of the signals SA, SB and SC are maintained at zero levels, and at the boundary between M1 and M2 the signals SA, SB and SC change to predetermined positive levels upon entering the M2 image.

This is to say, as the levels of the signals SA, SB and SC are maintained at zero at the boundary, the signal Sout generated by the switching circuit 26 exhibits a zero level, and the output of the band-pass filter 22 (namely, the signal SB) and the luminance signal component are divided by the delay circuit 29, so it is possible to supply the signal Sco and the luminance signal Syo.

In connection with the border at which switching from monochrome to colour takes place, it is possible to avoid dot disturbance as the line interference is effectively avoided.

In the same manner the vertical separation is such that each differ. In the case of a coloured image video signal Sv, the levels of the signals SA, SB and SC are continuously switched.

At the boundary, if the signals SA, SB and SC are not either positive or negative, the signal Sout level is maintained at a zero level, while in the case where said signals are either positive or negative, the level is maintained at the value of the signal selected as closest to zero.

In the case of the circuit arrangement shown in Figure 7, with the comb filter circuit 6, if we express the relationship between the signals produced in the same manner as that done with signals SA, SB and SC, we obtain:

$$SC = \left| \frac{A + C}{2} \right| \quad \ldots\ldots (4)$$

In the case wherein the signals SA, SB and SC are either positive or negative, the following relationship is derived:

$$SC = \frac{|A| + |C|}{2} \qquad \ldots. (5)$$

Thus, as will be appreciated, at unrelated sections, line spacing interference cannot be avoided.

Therefore, in the present embodiment, even when the values of the signals SA, SB and SC are not all positive or negative, the line interference is avoided, and in the event that a comb type filter is used, at the uncorrelated portions the line spacing interference problem is reduced, which makes it possible to reduce dot disturbance.

In connection with the previously mentioned image M (Figure 8), as shown in Figure 4, when the video signal Sv (Figure 4A) undergoes a change to the black level in the ith line, the signals SA, SB and SC respectively contain high frequency ringing noise in the ith, ith+1, and ith+2 lines.

It should be noted that in the ith line, the levels of the signals SB and SC are maintained at zero, and that in the ith+1 line, the level of the signals SA and SC are maintained at zero, while in the case of the ith+2 line, the levels of the signals SA and SB are maintained at zero, and the level of the signal Sout from the ith line to the ith+2 line is maintained at a zero level (see Figure 4E).

Accordingly, the chroma signal Sco (Figure 4F) exhibits the same characteristics as the signal SB, and thus it is possible by using the comb filter circuit to remove the high frequency noise from the signal Syo (Figure 4G).

In addition to this, if band separation is used, it is possible to improve the resolution of the image, and in the event that a comb filter circuit is employed with PAL type video signals, the separation of the chroma and the luminance signal components can be carried out.

In summary, this embodiment is such that the band-pass filter 24 acts as means for extracting the chroma signal SA from the video signal Sv, the delay circuit 21 and the band-pass filter 22 act as means for extracting the signal SB which is delayed by one line period compared with the signal SA, and the delay circuits 21 and 25 along with the band-pass filter 22 act as means for extracting the signal SC with a two line period delay with respect to the signal SA supplied by the band-pass filter 24.

The switching circuit 26 receives the three signals and selects, when all of the signals are all either positive or all negative, the signal which exhibits the level closest to zero. If the signals are either positive or negative, selection is made whereby the output of the switching circuit 26 assumes a zero level.

In addition, the subtracter 28 is arranged to subtract the signal Sout from the signal SB, and thus form the chroma signal Sco.

At the same time, the delay circuit 21 delays the video signal Sv by one line period, and thus acts as a primary delay means, while the subtracters 28 and 30 are arranged to receive the signal Sout and signal SB to act as arithmetic logic means which generates the luminance signal Syo.

With the above arrangement, the three chroma signals SA, SB and SC which exhibit a 0, 1 and 2 horizontal scanning line period delay are subject to a selection process depending on whether they exhibit positive, negative or zero signal levels, which process enables the value of the signal Sout to be subtracted from the signal SB in a manner wherein the line interference of the uncorrelated sections and the dot disturbances is reduced.

In addition to this, the effect of the vertical line signal component generation is such that the chroma signal Sco which is extracted from the standard video signal Sv is used to modify the generation of the luminance signal Syo, and this results in the resolution being improved.

Moreover, when the chroma and luminance signals Sco and Syo are separated from a PAL type video signal Sv, the quality of the image reproduction is improved along with the improvement in resolution.

However, it should be noted that the present invention is not limited to arrangements wherein the luminance signal Syo is produced by firstly producing the chroma signal Sco and then modifying the basic video signal Sv to obtain the same.

Figure 5 shows the second embodiment, which differs from the first one in that the arithmetic logic means comprises the subtracter 28 (which is arranged to receive the signal Sout and the signal SB in the same manner as in the case of the first embodiment) and further comprises a subtracter 42 which receives the signal Sv after two sequential delays along with the signal SB; and an adder 44 which receives the signal Sout signal along with the output of the subtracter 42.

As shown, the adder 44 supplies the signal Syo based on the signal Syo and the results obtained by subtracting the signal SB from the signal Sv which has been delayed by two line periods.

The invention is not limited to the use of band-pass filters to derive the chrome band signal component as is the case in the second embodiment, and various other arrangements which achieve the same end may be envisaged.

## Claims

1. A filter circuit (20) comprising:
restriction means (24) for extracting a chroma band signal component from a video signal and supplying a first signal;
first delay means (21) for delaying said video signal by a horizontal scanning line period and supplying a second signal;
second delay means (25) for delaying said second signal by a horizontal scanning line period and supplying a third signal;
selection means (26) which is responsive to said first, second and third signals, for:
in the event that said first, second and third signals are either all positive or all negative, selecting the value of said first, second or third signal which is closest to zero and supplying a signal indicative thereof, and
in the event that all of said first, second and third signals exhibit one of a positive and a negative value, selecting a zero value and supplying a signal indicative thereof; and
arithmetic logic means (28) responsive to the signals supplied by said selection means (26) and said first delay means (21) for deriving a chroma signal.

2. A filter circuit (20; 40) comprising:
a first delay means (21) for delaying a video signal by a horizontal scanning line period and supplying a first signal indicative thereof;
restriction means (24) for extracting a chroma band signal component from the video signal and supplying a second signal indicative thereof;
a second delay means (25) for delaying said first signal by a horizontal scanning line period and supplying a third signal indicative thereof;
a third delay means (29) for delaying said first signal by a horizontal scanning line period and supplying a fourth signal indicative thereof;
selection means responsive to said first, second and third signals for: in the event that said first, second and third signals are either all positive or all negative, selecting the value of said first, second or third signal which is closest to zero and supplying an output signal indicative thereof, and
in the event that all of said first, second and third signals exhibit one of a positive and a negative value, selecting a zero value and supplying an output signal indicative thereof; and
arithmetic logic means (28, 30; 42, 44) responsive to said first signal from said first delay means, the output of said selection means (26), and said fourth signal from said second delay means for deriving a luminance signal.

3. A filter circuit (20) according to claim 1 wherein said restriction means (24) comprises a first band-pass filter (24) which receives the video signal and which supplies said first signal;
wherein said first delay means (21) comprises a first delay circuit (21), said first delay circuit (21) being connected in series with a second band-pass filter (22), said first delay circuit being arranged to receive the video signal, and said second band-pass filter (22) being arranged to supply said second signal;
wherein said second delay means (25) comprises a second delay circuit (25) which is connected to the output of said second band-pass filter (22) and is arranged to supply said third signal; and
wherein said selection means (26) comprises a switching circuit (26) having first, second and third inputs which respectively receive said first, second and third signals, and an output.

4. A filter circuit (20) according to claim 3 further comprising: a third delay circuit (29), said third delay circuit (29) being arranged to receive the output of said first delay circuit (21); and wherein said arithmetic logic means (28) comprises:
a first arithmetic circuit (28) which is operatively connected to the output of said second band-pass filter (22) and the output of said switching circuit (26), said first arithmetic circuit (28) being arranged to subtract said the signal which appears at the output of said switching circuit (26) from the signal which is supplied by said second band-pass filter (22) to derive said chroma signal; and
a second arithmetic circuit (30) which is operatively connected to the output of said first arithmetic circuit (28) and to the output of said third delay circuit (29), said second arithmetic unit (30) deriving a luminance signal.

5. A filter circuit (40) according to claim 3 further comprising: a third delay circuit (29), said third delay circuit

(29) being arranged to receive the output of said first delay circuit (21); and wherein said arithmetic logic means (28) comprises:
first arithmetic circuit (28) which is operatively connected to the output of said switching circuit (26), said first arithmetic circuit (28) being arranged to subtract the signal which appears at the output of said switching circuit (26) from the signal which is supplied by said second band-pass filter (22), said first arithmetic circuit (28) deriving said chroma signal;
a second arithmetic circuit (42) which is operatively connected to the outputs of said second band-pass filter (22) and said third delay circuit (29); and
a third arithmetic circuit (44) which is operatively connected to the output of said switching circuit (26) and to the output of said second arithmetic circuit (42), said third arithmetic circuit (44) deriving a luminance signal.

## Patentansprüche

1. Filterschaltung (20), die aufweist:
   Beschränkungsmittel (24) zum Extrahieren einer Chrominanzbandsignalkomponente aus einem Videosignal und Liefern eines ersten Signals;
   erste Verzögerungsmittel (21) zum Verzögern des Videosignals um eine horizontale Zeilenabtastperiode und Liefern eines zweiten Signals;
   zweite Verzögerungsmittel (25) zum Verzögern des zweiten Signals um eine horizontale Zeilenabtastperiode und Liefern eines dritten Signals;
   Auswahlmittel (26), die auf die ersten, zweiten und dritten Signale antworten, für
   den Fall, daß die ersten, zweiten und dritten Signale sämtlich entweder positiv oder negativ sind, Auswählen des Wertes des ersten, zweiten oder dritten Signals, der am nächsten einer Null ist und Liefern eines Signals, das darauf hinweist, und
   in dem Fall, daß die ersten, zweiten und dritten Signale einen positiven oder negativen Wert zeigen, Auswählen eines Nullwerts und Liefern eines Signals, das darauf hinweist; und
   Berechnungsmittel (28), die auf die Signale antworten, die von den Auswahlmitteln (26) und den ersten Verzögerungsmitteln (21) geliefert werden, um ein Chrominanzsignal herzuleiten.

2. Filterschaltung (20; 40), die aufweist:
   erste Verzögerungsmittel (21) zum Verzögern eines Videosignals um eine horizontale Zeilenabtastperiode und Liefern eines ersten Signals, das darauf hinweist;
   Beschränkungsmittel (24) zum Extrahieren einer Chrominanzbandsignalkomponente aus dem Videosignal und Liefern eines zweiten Signals, das darauf hinweist;
   zweite Verzögerungsmittel (25) zum Verzögern des ersten Signals um eine horizontale Zeilenabtastperiode und Liefern eines dritten Signals, das darauf hinweist;
   dritte Verzögerungsmittel (29) zum Verzögern des ersten Signals um eine horizontale Zeilenabtastperiode und Liefern eines vierten Signals, das darauf hinweist;
   Auswahlmittel, die auf die ersten, zweiten und dritten Signale antworten, für
   den Fall, daß die ersten, zweiten und dritten Signale sämtlich entweder positiv oder negativ sind, Auswählen des Wertes des ersten, zweiten oder dritten Signals, der einer Null am nächsten ist, und Liefern eines Ausgangssignals, das darauf hinweist, und
   in dem Fall, daß die ersten, zweiten und dritten Signale sämtlich einen positiven oder negativen Wert zeigen, Auswählen eines Nullwertes und Liefern eines Ausgangssignals, das darauf hinweist; und
   Berechnungsmittel (28, 30; 42, 44), die auf das erste Signal von den ersten Verzögerungsmitteln, auf das Ausgangssignal der Auswahlmittel (26) und auf das vierte Signal von den zweiten Verzögerungsmitteln antworten, um ein Luminanzsignal herzuleiten.

3. Filterschaltung (20) nach Anspruch 1, wobei die Beschränkungsmittel (24) ein Bandpaßfilter (24) aufweisen, die ein Videosignal empfangen und die ein erstes Signal liefern;
   wobei die ersten Verzögerungsmittel (21) eine erste Verzögerungsschaltung (21) aufweisen, wobei die erste Verzögerungsschaltung (21) seriell mit einem zweiten Bandpaßfilter (22) verbunden ist, wobei die erste Verzögerungsschaltung eingerichtet ist, das Videosignal zu empfangen, und wobei das zweite Bandpaßfilter (22) eingerichtet ist, das zweite Signal zu liefern;
   wobei die zweiten Verzögerungsmittel (25) eine zweite Verzögerungsschaltung (25) aufweisen, die mit dem Ausgang des zweiten Bandpaßfilters (22) verbunden ist und eingerichtet ist, das dritte Signal

zu liefern; und

wobei die Auswahlmittel (26) eine Schalterschaltung aufweisen (26), die einen ersten, zweiten und dritten Eingang hat, die jeweils die ersten, zweiten und dritten Signale empfangen, und einen Ausgang aufweisen.

**4.** Filterschaltung (20) nach Anspruch 3, die weiter aufweist:

eine dritte Verzögerungsschaltung (29), wobei die dritte Verzögerungsschaltung (29) eingerichtet ist, das Ausgangssignal der ersten Verzögerungsschaltung (21) zu empfangen; und wobei die Berechnungsmittel (28) aufweisen:

eine erste Berechnungsschaltung (28), die mit dem Ausgang des zweiten Bandpaßfilters (22) und dem Ausgang der Schalterschaltung (26) wirksam verbunden ist, wobei die erste Berechnungsschaltung (28) eingerichtet ist, das Signal, das am Ausgang der Schalterschaltung (26) erscheint, von dem Signal zu subtrahieren, das durch das zweite Bandpaßfilter (22) geliefert wird, um das Chrominanzsignal herzuleiten, und

eine zweite Berechnungsschaltung (30), die mit dem Ausgang der ersten Berechnungsschaltung (28) und mit dem Ausgang der dritten Verzögerungsschaltung (29) wirksam verbunden ist, wobei die zweite Berechnungseinheit (30) ein Luminanzsignal herleitet.

**5.** Filterschaltung (40) nach Anspruch 3, die weiter aufweist:

eine dritte Verzögerungsschaltung (29), wobei die dritte Verzögerungsschaltung (29) eingerichtet ist, das Ausgangssignal der ersten Verzögerungsschaltung (21) zu empfangen; und

wobei die Berechnungsmittel (28) umfassen:

eine erste Berechnungsschaltung (28), die mit dem Ausgang der Schalterschaltung (26) wirksam verbunden ist, wobei die erste Berechnungsschaltung (28) eingerichtet ist, das Signal, das am Ausgang der Schalterschaltung (26) erscheint, von dem Signal zu subtrahieren, das durch das zweite Bandpaßfilter (22) geliefert wird, wobei die erste Berechnungsschaltung (28) das Chrominanzsignal herleitet;

eine zweite Berechnungsschaltung (42), die mit den Ausgängen des zweiten Bandpaßfilters (22) und der dritten Verzögerungsschaltung (29) wirksam verbunden ist; und

eine dritte Berechnungsschaltung (44), die mit dem Ausgang der Schalterschaltung (26) und dem Ausgang der zweiten Berechnungsschaltung (42) wirksam verbunden ist, wobei die dritte Berechnungsschaltung (44) ein Luminanzsignal herleitet.

## Revendications

**1.** Circuit filtre (20) comprenant :

un moyen de limitation (24) pour extraire une composante de signal de bande de chrominance d'un signal vidéo et pour délivrer un premier signal ;

un premier moyen de retardement (21) pour retarder ledit signal vidéo d'une période de ligne de balayage horizontal et pour délivrer un deuxième signal ;

un second moyen de retardement (25) pour retarder ledit deuxième signal d'une période de ligne de balayage horizontal et pour délivrer un troisième signal ;

un moyen de sélection (26) qui est sensible auxdits premier, deuxième et troisième signaux, pour :

dans le cas où lesdits premier, deuxième et troisième signaux sont soient tous positifs soient tous négatifs, sélectionner la valeur dudit premier, deuxième ou troisième signal qui est la plus proche de zéro et pour délivrer un signal indicatif de cette valeur ;

dans le cas où lesdits premier, deuxième et troisième signaux présentent des valeurs dont l'une n'a pas le même signe que les autres, sélectionner une valeur nulle et délivrer un signal indicatif de cette valeur ; et,

un moyen arithmétique et logique (28) sensible aux signaux fournis par ledit moyen de sélection (26) et ledit premier moyen de retardement (21) pour fournir un signal de chrominance.

**2.** Circuit filtre (20 ; 40) comprenant :

un premier moyen de retardement (21) pour retarder un signal vidéo d'une période de ligne de balayage horizontal et pour délivrer un premier signal indicatif de celui-ci ;

un moyen de limitation (24) pour extraire une composante de signal de bande de chrominance du signal vidéo et pour délivrer un deuxième signal indicatif de celle-ci ;

un deuxième moyen de retardement (25) pour retarder ledit premier signal d'une période de ligne

de balayage horizontal et pour délivrer un troisième signal indicatif de celui-ci ;

un troisième moyen de retardement (29) pour retarder ledit premier signal d'une période de ligne de balayage horizontal et pour délivrer un quatrième signal indicatif de celui-ci ;

un moyen de sélection sensible auxdits premier, deuxième et troisième signaux, pour :

dans le cas où lesdits premier, deuxième et troisième signaux sont soient tous positifs soient tous négatifs, sélectionner la valeur dudit premier, deuxième ou troisième signal qui est la plus proche de zéro et pour délivrer un signal de sortie indicatif de cette valeur ;

dans le cas où lesdits premier, deuxième et troisième signaux présentent des valeurs dont l'une n'a pas le même signe que les autres, sélectionner une valeur nulle et délivrer un signal de sortie indicatif de cette valeur ; et,

un moyen arithmétique et logique (28, 30 ; 42, 44) sensible audit premier signal issu dudit premier moyen de retardement, à la sortie dudit moyen de sélection (26) et audit quatrième signal issu dudit second moyen de retardement pour fournir un signal de luminance.

3. Circuit filtre (20) selon la revendication 1, dans lequel ledit moyen de limitation (24) comprend un premier filtre passe-bande (24) qui reçoit le signal vidéo et qui délivre ledit premier signal ;

dans lequel ledit premier moyen de retardement (21) comprend un premier circuit à retard (21), ledit premier circuit à retard (21) étant connecté en série avec un deuxième filtre passe-bande (22), ledit premier circuit à retard étant agencé de façon à recevoir le signal vidéo, et ledit deuxième filtre passe-bande (22) étant agencé pour délivrer ledit deuxième signal ;

dans lequel ledit deuxième moyen de retardement (25) comprend un deuxième circuit à retard (25) qui est connecté à la sortie dudit deuxième filtre passe-bande (22) et qui est agencé pour délivrer ledit troisième signal ; et,

dans lequel ledit moyen de sélection (26) comprend un circuit de commutation (26) ayant des première, deuxième et troisième entrées qui reçoivent, respectivement, lesdits premier, deuxième et troisième signaux, et une sortie.

4. Circuit filtre (20) selon la revendication 3, comprenant en outre :

un troisième circuit à retard (29), ledit troisième circuit à retard (29) étant agencé pour recevoir la sortie dudit premier circuit à retard (21) ; et dans lequel ledit moyen arithmétique et logique (28) comprend :

un premier circuit arithmétique (28) qui est connecté de façon fonctionnelle à la sortie dudit deuxième filtre passe-bande (22) et à la sortie dudit circuit de commutation (26), ledit premier circuit arithmétique (28) étant agencé de façon à soustraire, ledit signal qui apparaît à la sortie dudit circuit de commutation (26), du signal qui est délivré par ledit deuxième filtre passe-bande (22) pour fournir ledit signal de chrominance ; et,

un second circuit arithmétique (30) qui est connecté de manière fonctionnelle à la sortie dudit premier circuit arithmétique (28) et à la sortie dudit troisième circuit à retard (29), ledit second circuit arithmétique (30) fournissant un signal de luminance.

5. Circuit filtre (40) selon la revendication 3, comprenant en outre :

un troisième circuit à retard (29), ledit troisième circuit à retard (29) étant agencé pour recevoir la sortie dudit premier circuit à retard (21) ; et dans lequel ledit moyen arithmétique et logique (28) comprend :

un premier circuit arithmétique (28) qui est connecté de façon fonctionnelle à la sortie dudit circuit de commutation (26), ledit premier circuit arithmétique (28) étant agencé de façon à soustraire, ledit signal qui apparaît à la sortie dudit circuit de commutation (26), du signal qui est délivré par ledit deuxième filtre passe-bande (22), ledit premier circuit arithmétique (28) fournissant ledit signal de chrominance ;

un deuxième circuit arithmétique (42) qui est connecté de manière fonctionnelle aux sorties dudit second filtre passe-bande (22) et audit troisième circuit à retard (29) ; et,

un troisième circuit arithmétique (44) qui est connecté de manière fonctionnelle à la sortie dudit circuit de commutation (26) et à la sortie dudit deuxième circuit arithmétique (42), ledit troisième circuit arithmétique (44) fournissant un signal de luminance.

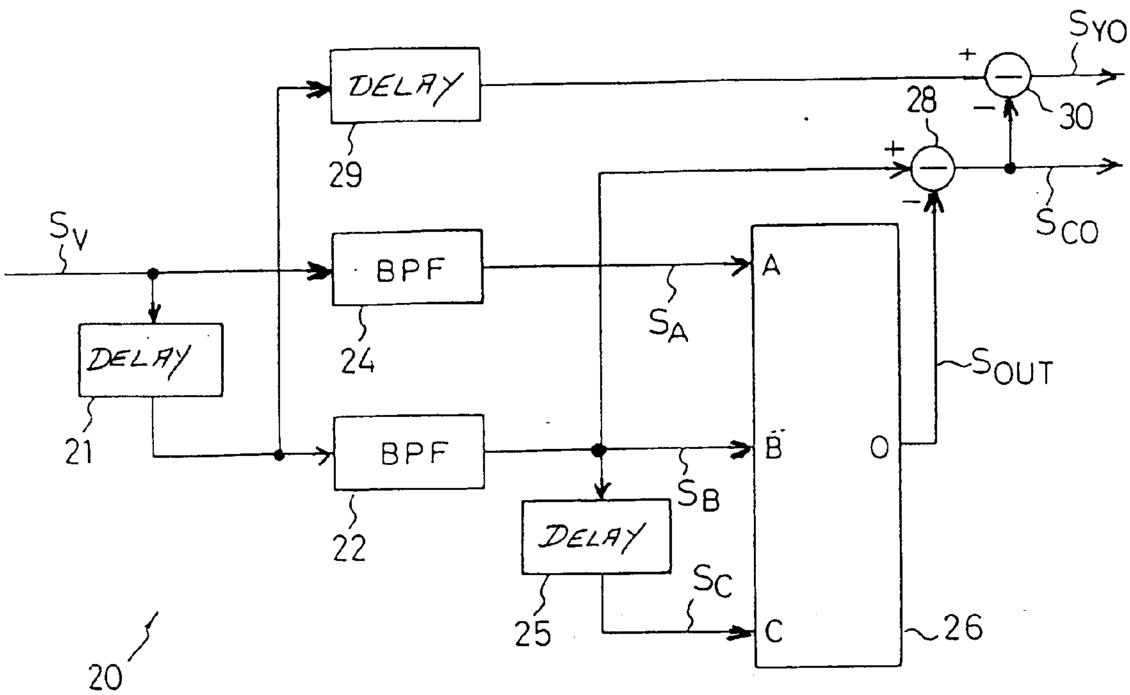


FIG. 1

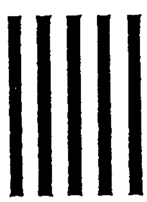

FIG. 2

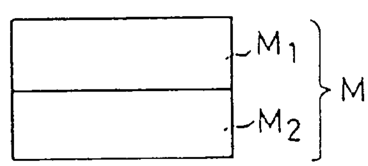


FIG. 3

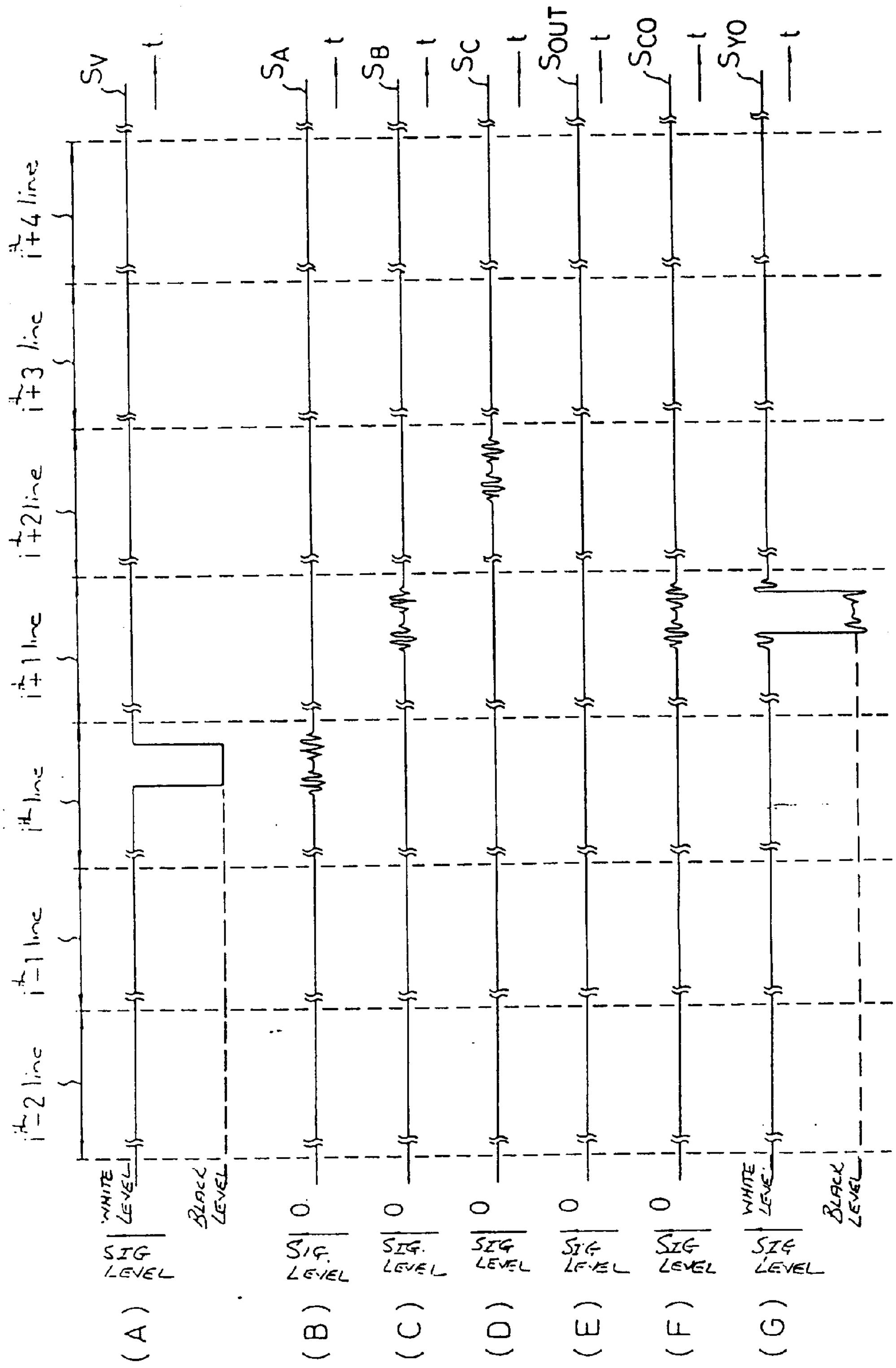
(A)
(B)
(C)
(D)
(E)
(F)
(G)
SIG LEVEL
WHITE LEVEL
BLACK LEVEL
0
SV
SA
SB
SC
SOUT
SCO
SYO
t
i-2 line
i-1 line
i line
i+1 line
i+2 line
i+3 line
i+4 line

FIG. 4

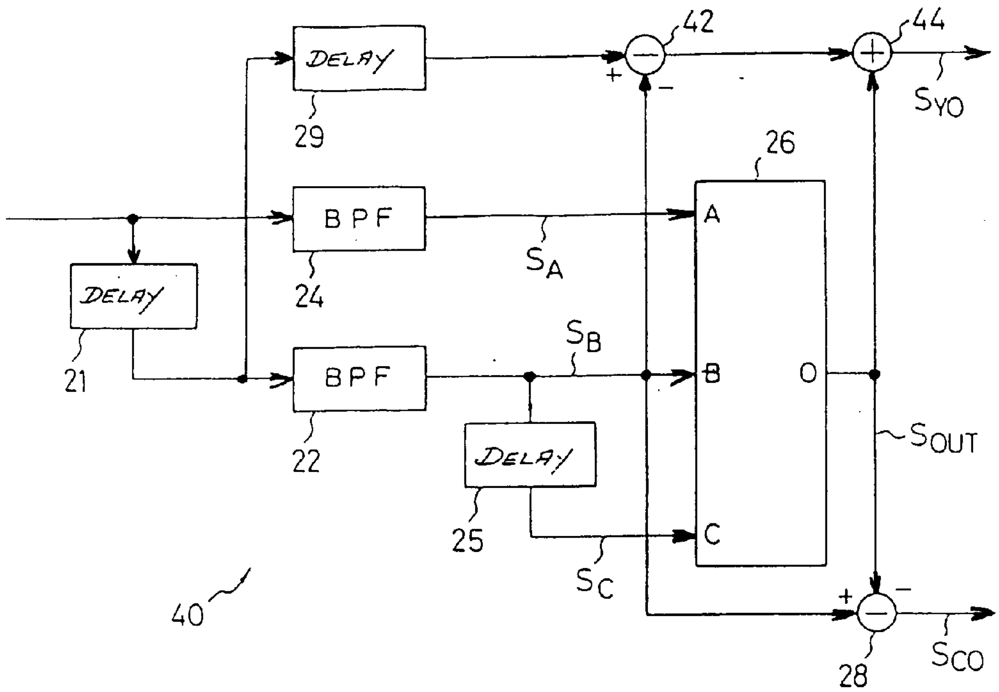


FIG. 5

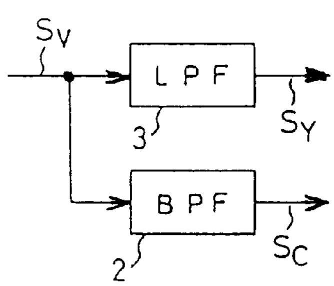


FIG. 6

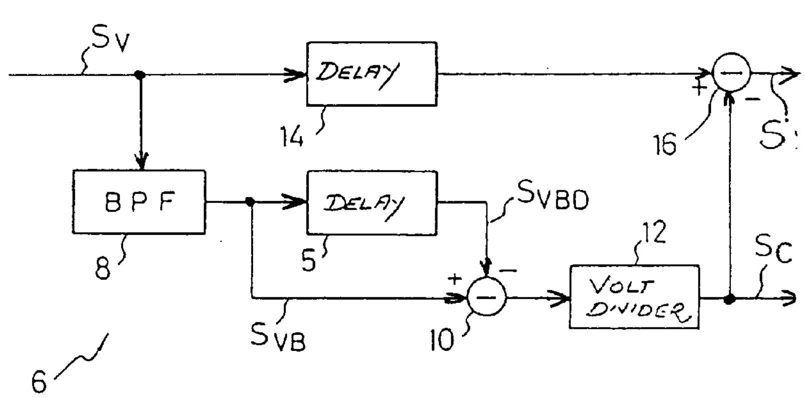


FIG. 7

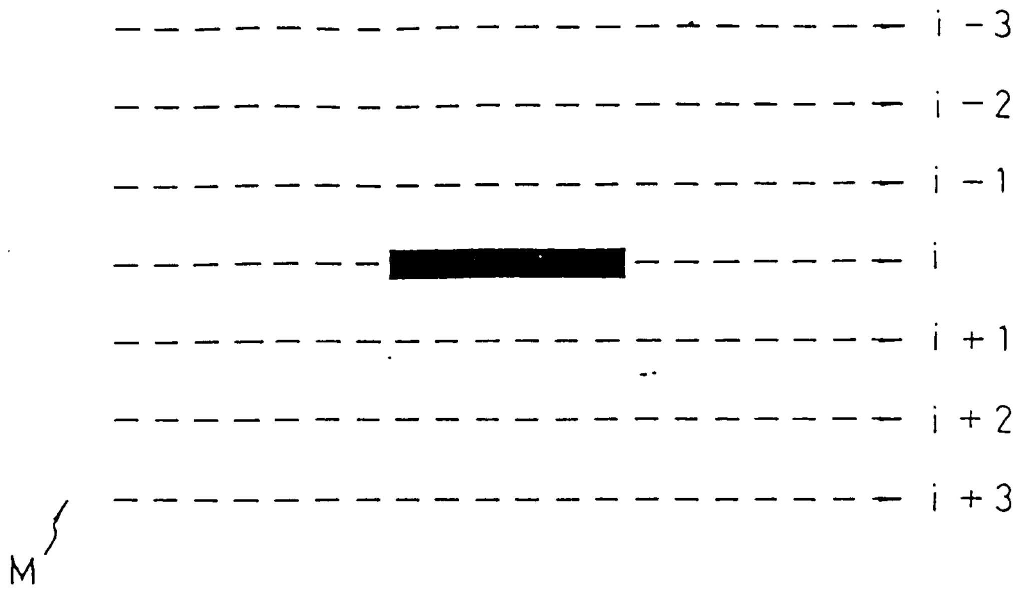


FIG. 8

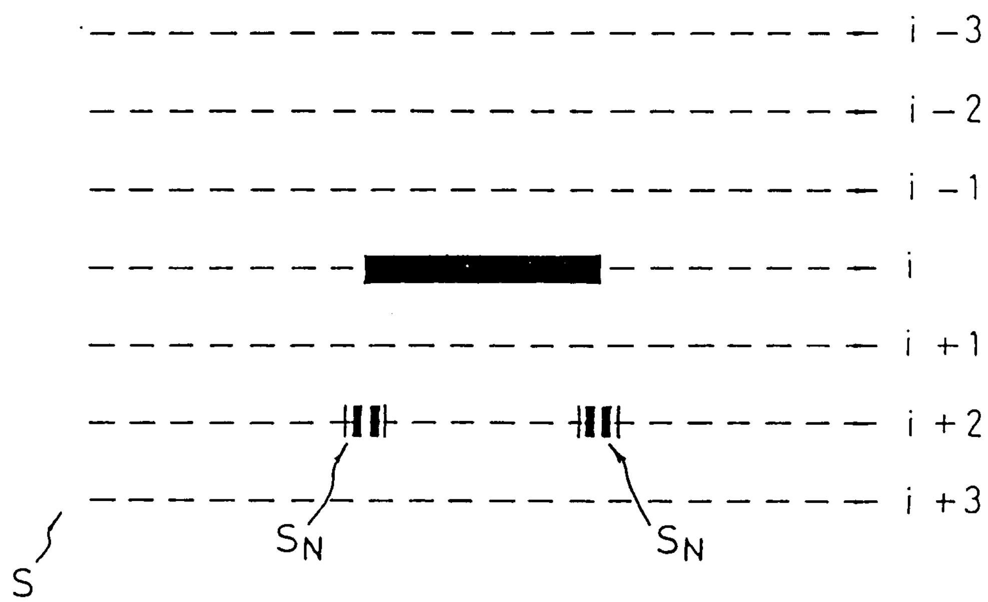


FIG. 10

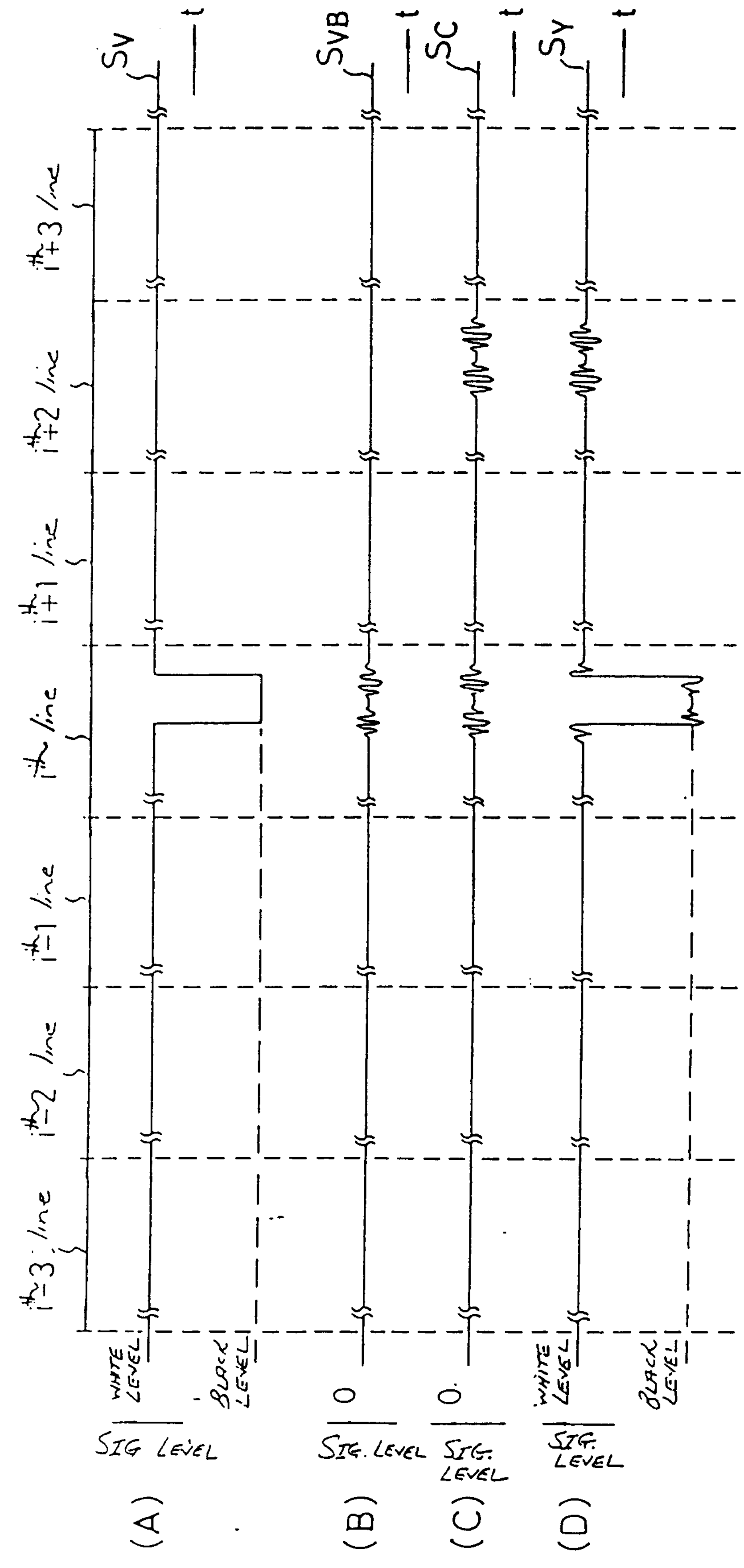
Sv
SVB
SC
SY
t
i-3 th line
i-2 th line
i-1 th line
i th line
i+1 th line
i+2 th line
i+3 th line
WHITE LEVEL
BLACK LEVEL
SIG LEVEL
0
SIG. LEVEL
0
SIG. LEVEL
WHITE LEVEL
BLACK LEVEL
SIG. LEVEL
(A)
(B)
(C)
(D)

FIG. 9